# EUROPEAN PATENT APPLICATION

(11) **EP 4 247 052 A1**
(43) Date of publication of application: **20.09.2023**
(21) Application number: 21914477.1
(22) Date of filing: 29.12.2021
(51) Int. Cl.: H04W 28/24

(54) **METHOD AND APPARATUS FOR ENSURING SERVICE QUALITY, AND COMMUNICATION DEVICE**

(30) Priority: 31.12.2020 CN 202011635144
(71) Applicant: Vivo Mobile Communication Co., Ltd., Dongguan, Guangdong 523863 (CN)
(72) Inventor: KE, Xiaowan, Dongguan, Guangdong 523863 (CN); YANG, Xiaodong, Dongguan, Guangdong 523863 (CN)
(74) Representative: Murgitroyd & Company
(86) International application number: PCT/CN2021/142406
(87) International publication number: WO 2022/143745

(57) **Abstract**

Embodiments of this application provide a quality of service guarantee method and apparatus, and a communications device, and relate to the field of wireless communications technologies. A specific implementation solution is as follows: A quality of service guarantee method applied to a first communications device includes: sending the first information, where the first information includes at least one of the following: first request information, where the first request information is used to request to perform traffic-level QoS guarantee on a first object; description information of the first object; traffic-level QoS information; first delay information, including one of the following: delay information within a terminal, and delay information between a terminal-side data end and a terminal; and fourth delay information, including one of the following: delay information within a server, and delay information within a network-side data end.

## Description

### CROSS-REFERENCE TO RELATED APPLICATION

This application claims priority to Chinese Patent Application No. 202011635144.6, filed on December 31, 2020 in China, which is incorporated herein by reference in its entirety.

### TECHNICAL FIELD

Embodiments of this application relate to the field of wireless communications technologies, and in particular, to a quality of service guarantee method and apparatus, and a communications device.

### BACKGROUND

As a time-sensitive traffic appears, for example, an extended reality (Extended Reality, XR) terminal (that is, virtual reality (Virtual Reality, VR)/augmented reality (Augmented Reality, AR)), end-to-end delay guarantee requirements rise. However, traditional delay guarantee is static segmentation, each segment is separately guaranteed, and only one segment is guaranteed in a communications network. However, a computing delay within a server and a computing delay within a terminal exhibit a degree of scalability with different traffics, different computing requirements, and different terminal capabilities. Therefore, a delay between a terminal and a gateway is not flexible enough in static division. How to improve end-to-end traffic-level quality of service (Quality of Service, QoS) guarantee is a technical problem that needs to be urgently resolved at present.

### SUMMARY

Embodiments of this application provide a quality of service guarantee method and apparatus, and a communications device, to resolve a problem of how to improve end-to-end traffic-level QoS guarantee.

According to a first aspect, an embodiment of this application provides a quality of service guarantee method, applied to a first communications device and including:
sending first information, where
the first information includes at least one of the following:
   first request information, where the first request information is used to request to perform traffic-level QoS guarantee on a first object;
   description information of the first object;
   traffic-level QoS information;
   first delay information, where the first delay information includes one of the following: delay information within a terminal, and delay information between a terminal-side data end and a terminal; and
   fourth delay information, where the fourth delay information includes one of the following: delay information within a server, and delay information within a network-side data end, where
   the first object includes at least one of the following: a terminal, a first traffic, first information, first data, a first data channel, and a first computing task; and
   the description information of the first object includes at least one of the following: description information of the terminal, description information of the first traffic, description information of the first information, description information of the first data, description information of the first data channel, and description information of the first computing task.

According to a second aspect, an embodiment of this application provides a quality of service guarantee method, applied to a second communications device and including:
obtaining related information of a first operation, where the related information of the first operation includes at least one of the following: first information, third delay information, and related subscription information of traffic-level QoS guarantee; and
performing the first operation according to the related information of the first operation, where
the first operation includes at least one of the following:
   determining to send second information or not to send second information;
   determining or changing fourth delay information, where the fourth delay information includes one of the following: delay information within a server, and delay information within a network-side data end; and
   determining or changing second delay information, where the second delay information includes one of the following: a delay between a terminal and a gateway, and a transmission delay within a communications network;
   the first information includes at least one of the following:
      first request information, where the first request information is used to request to perform traffic-level QoS guarantee on a first object;
      description information of the first object;
      traffic-level QoS information;
      first delay information, where the first delay information includes one of the following: delay information within a terminal, and delay information between a terminal-side data end and a terminal; and
      fourth delay information, where the fourth delay information includes one of the following: delay information within a server, and delay information within a network-side data end, where
      the first object includes at least one of the following: a terminal, a first traffic, first information, first data, a first data channel, and a first computing task; and
      the description information of the first object includes at least one of the following: description information of the terminal, description information of the first traffic, description information of the first information, description information of the first data, description information of the first data channel, and description information of the first computing task;
      the third delay information includes one of the following: a delay between a gateway and a server, a delay between a communications network and a server, a delay between a gateway and a network-side data end, and a delay between a communications network and a network-side data end; and
      the second information includes at least one of the following:
         second request information, where the second request information is used to request at least one of the following: performing traffic-level QoS guarantee on a second object, and generating or changing related policy information of traffic-level QoS guarantee;
         description information of the second object;
         traffic-level QoS information;
         first delay information, where the first delay information includes one of the following: delay information within a terminal, and delay information between a terminal-side data end and a terminal;
         third delay information; and
         fourth delay information, where the fourth delay information includes one of the following: delay information within a server, and delay information within a network-side data end, where
         the second object includes at least one of the following: a terminal, a second traffic, second information, second data, a second data channel, and a second computing task; and
         the description information of the second object includes at least one of the following: description information of the terminal, description information of the second traffic, description information of the second information, description information of the second data, description information of the second data channel, and description information of the second computing task, where
         the second object is the same as or different from the first object.

According to a third aspect, an embodiment of this application provides a quality of service guarantee method, applied to a third communications device and including:
obtaining related information of a second operation, where the related information of the second operation includes at least one of the following: first information, second information, third delay information, and related subscription information of traffic-level QoS guarantee; and
performing the second operation according to the related information of the second operation, where
the second operation includes at least one of the following:
   determining to generate or change related policy information of traffic-level QoS guarantee;
   determining or changing fourth delay information, where the fourth delay information includes one of the following: delay information within a server, and delay information within a network-side data end;
   determining or changing second delay information, where the second delay information includes one of the following: a delay between a terminal and a gateway, and a transmission delay within a communications network;
   determining a PCC rule; and
   determining QoS guarantee requirement information in a server, where the QoS guarantee requirement information in the server includes the fourth delay information;
   the third delay information includes one of the following: a delay between a gateway and a server, a delay between a communications network and a server, a delay between a gateway and a network-side data end, and a delay between a communications network and a network-side data end;
   the first information includes at least one of the following:
      first request information, where the first request information is used to request to perform traffic-level QoS guarantee on a first object;
      description information of the first object;
      traffic-level QoS information;
      first delay information, where the first delay information includes one of the following: delay information within a terminal, and delay information between a terminal-side data end and a terminal; and
      fourth delay information, where the fourth delay information includes one of the following: delay information within a server, and delay information within a network-side data end, where
      the first object includes at least one of the following: a terminal, a first traffic, first information, first data, a first data channel, and a first computing task; and
      the description information of the first object includes at least one of the following: description information of the terminal, description information of the first traffic, description information of the first information, description information of the first data, description information of the first data channel, and description information of the first computing task; and
      the second information includes at least one of the following:
         second request information, where the second request information is used to request at least one of the following: performing traffic-level QoS guarantee on a second object, and generating or changing related policy information of traffic-level QoS guarantee;
         description information of the second object;
         traffic-level QoS information;
         first delay information, where the first delay information includes one of the following: delay information within a terminal, and delay information between a terminal-side data end and a terminal;
         third delay information; and
         fourth delay information, where the fourth delay information includes one of the following: delay information within a server, and delay information within a network-side data end, where
         the second object includes at least one of the following: a terminal, a second traffic, second information, second data, a second data channel, and a second computing task; and
         the description information of the second object includes at least one of the following: description information of the terminal, description information of the second traffic, description information of the second information, description information of the second data, description information of the second data channel, and description information of the second computing task, where
         the second object is the same as or different from the first object.

According to a fourth aspect, an embodiment of this application provides a quality of service guarantee method, applied to a fourth communications device and including:
obtaining a third request, where the third request is used to request related subscription information of traffic-level QoS guarantee; and
sending the related subscription information of traffic-level QoS guarantee according to the third request.

According to a fifth aspect, an embodiment of this application provides a communications device, where the communications device is a first communications device and includes:
a first sending module, configured to send first information, where
the first information includes at least one of the following:
   first request information, where the first request information is used to request to perform traffic-level QoS guarantee on a first object;
   description information of the first object;
   traffic-level QoS information;
   first delay information, where the first delay information includes one of the following: delay information within a terminal, and delay information between a terminal-side data end and a terminal; and
   fourth delay information, where the fourth delay information includes one of the following: delay information within a server, and delay information within a network-side data end, where
   the first object includes at least one of the following: a terminal, a first traffic, first information, first data, a first data channel, and a first computing task; and
   the description information of the first object includes at least one of the following: description information of the terminal, description information of the first traffic, description information of the first information, description information of the first data, description information of the first data channel, and description information of the first computing task.

According to a sixth aspect, an embodiment of this application provides a quality of service guarantee apparatus, applied to a second communications device and including:
a first obtaining module, configured to obtain related information of a first operation, where the related information of the first operation includes at least one of the following: first information, third delay information, and related subscription information of traffic-level QoS guarantee; and
a first executing module, configured to perform the first operation according to the related information of the first operation, where
the first operation includes at least one of the following:
   determining to send second information or not to send second information;
   determining or changing fourth delay information, where the fourth delay information includes one of the following: delay information within a server, and delay information within a network-side data end; and
   determining or changing second delay information, where the second delay information includes one of the following: a delay between a terminal and a gateway, and a transmission delay within a communications network;
   the first information includes at least one of the following:
      first request information, where the first request information is used to request to perform traffic-level QoS guarantee on a first object;
      description information of the first object;
      traffic-level QoS information;
      first delay information, where the first delay information includes one of the following: delay information within a terminal, and delay information between a terminal-side data end and a terminal; and
      fourth delay information, where the fourth delay information includes one of the following: delay information within a server, and delay information within a network-side data end, where
      the first object includes at least one of the following: a terminal, a first traffic, first information, first data, a first data channel, and a first computing task; and
      the description information of the first object includes at least one of the following: description information of the terminal, description information of the first traffic, description information of the first information, description information of the first data, description information of the first data channel, and description information of the first computing task;
      the third delay information includes one of the following: a delay between a gateway and a server, a delay between a communications network and a server, a delay between a gateway and a network-side data end, and a delay between a communications network and a network-side data end; and
      the second information includes at least one of the following:
         second request information, where the second request information is used to request at least one of the following: performing traffic-level QoS guarantee on a second object, and generating or changing related policy information of traffic-level QoS guarantee;
         description information of the second object;
         traffic-level QoS information;
         first delay information, where the first delay information includes one of the following: delay information within a terminal, and delay information between a terminal-side data end and a terminal;
         third delay information; and
         fourth delay information, where the fourth delay information includes one of the following: delay information within a server, and delay information within a network-side data end, where
         the second object includes at least one of the following: a terminal, a second traffic, second information, second data, a second data channel, and a second computing task; and
         the description information of the second object includes at least one of the following: description information of the terminal, description information of the second traffic, description information of the second information, description information of the second data, description information of the second data channel, and description information of the second computing task, where
         the second object is the same as or different from the first object.

According to a seventh aspect, an embodiment of this application provides a quality of service guarantee apparatus, applied to a third communications device and including:
a second obtaining module, configured to obtain related information of a second operation, where the related information of the second operation includes at least one of the following: first information, second information, third delay information, and related subscription information of traffic-level QoS guarantee; and
a second executing module, configured to perform the second operation according to the related information of the second operation, where
the second operation includes at least one of the following:
   determining to generate or change related policy information of traffic-level QoS guarantee;
   determining or changing fourth delay information, where the fourth delay information includes one of the following: delay information within a server, and delay information within a network-side data end;
   determining or changing second delay information, where the second delay information includes one of the following: a delay between a terminal and a gateway, and a transmission delay within a communications network;
   determining a PCC rule; and
   determining QoS guarantee requirement information in a server, where the QoS guarantee requirement information in the server includes the fourth delay information;
   the third delay information includes one of the following: a delay between a gateway and a server, a delay between a communications network and a server, a delay between a gateway and a network-side data end, and a delay between a communications network and a network-side data end; and
   the first information includes at least one of the following:
      first request information, where the first request information is used to request to perform traffic-level QoS guarantee on a first object;
      description information of the first object;
      traffic-level QoS information;
      first delay information, where the first delay information includes one of the following: delay information within a terminal, and delay information between a terminal-side data end and a terminal; and
      fourth delay information, where the fourth delay information includes one of the following: delay information within a server, and delay information within a network-side data end, where
      the first object includes at least one of the following: a terminal, a first traffic, first information, first data, a first data channel, and a first computing task; and
      the description information of the first object includes at least one of the following: description information of the terminal, description information of the first traffic, description information of the first information, description information of the first data, description information of the first data channel, and description information of the first computing task; and
      the second information includes at least one of the following:
         second request information, where the second request information is used to request at least one of the following: performing traffic-level QoS guarantee on a second object, and generating or changing related policy information of traffic-level QoS guarantee;
         description information of the second object;
         traffic-level QoS information;
         first delay information, where the first delay information includes one of the following: delay information within a terminal, and delay information between a terminal-side data end and a terminal;
         third delay information; and
         fourth delay information, where the fourth delay information includes one of the following: delay information within a server, and delay information within a network-side data end, where
         the second object includes at least one of the following: a terminal, a second traffic, second information, second data, a second data channel, and a second computing task; and
         the description information of the second object includes at least one of the following: description information of the terminal, description information of the second traffic, description information of the second information, description information of the second data, description information of the second data channel, and description information of the second computing task, where
         the second object is the same as or different from the first object.

According to an eighth aspect, an embodiment of this application provides a quality of service guarantee apparatus, applied to a fourth communications device and including:
a third obtaining module, configured to obtain a third request, where the third request is used to request related subscription information of traffic-level QoS guarantee; and
a fourth sending module, configured to send the related subscription information of traffic-level QoS guarantee according to the third request.

According to a ninth aspect, an embodiment of this application provides a communications device, including a processor, a memory, and a computer program that is stored in the memory and executable on the processor, where the computer program is executed by the processor to implement the steps of the quality of service guarantee method provided in the first aspect, or implement the steps of the quality of service guarantee method provided in the second aspect, or implement the steps of the quality of service guarantee method provided in the third aspect, or implement the steps of the quality of service guarantee method provided in the fourth aspect.

According to a tenth aspect, an embodiment of this application provides a computer-readable storage medium. The computer-readable storage medium stores a computer program, and the computer program is executed by a processor to implement the steps of the quality of service guarantee method provided in the first aspect, or implement the steps of the quality of service guarantee method provided in the second aspect, or implement the steps of the quality of service guarantee method provided in the third aspect, or implement the steps of the quality of service guarantee method provided in the fourth aspect.

According to an eleventh aspect, an embodiment of this application provides a computer program product. The computer program product is stored in a non-transitory storage medium, and the computer program product is executed by at least one processor to implement the steps of the quality of service guarantee method provided in the first aspect, or implement the steps of the quality of service guarantee method provided in the second aspect, or implement the steps of the quality of service guarantee method provided in the third aspect, or implement the steps of the quality of service guarantee method provided in the fourth aspect.

According to a twelfth aspect, a communications device is provided, configured to implement the steps of the quality of service guarantee method provided in the first aspect, or implement the steps of the quality of service guarantee method provided in the second aspect, or implement the steps of the quality of service guarantee method provided in the third aspect, or implement the steps of the quality of service guarantee method provided in the fourth aspect.

It is not difficult to understand that in this embodiment, in a case that a traffic-level delay budget is determined, when a part of delay overheads change, a requirement of the traffic-level delay budget can be guaranteed by adjusting a remaining delay budget.

### BRIEF DESCRIPTION OF DRAWINGS

FIG. 1 is a schematic architectural diagram of a wireless communications system according to an embodiment of this application;
FIG. 2A is a first schematic diagram of a delay between UE and a server according to an embodiment of this application;
FIG. 2B is a second schematic diagram of a delay between UE and a server according to an embodiment of this application;
FIG. 3 is a schematic flowchart of a quality of service guarantee method according to an embodiment of this application;
FIG. 4 is a schematic flowchart of a quality of service guarantee method according to another embodiment of this application;
FIG. 5 is a schematic flowchart of a quality of service guarantee method according to still another embodiment of this application;
FIG. 6 is a schematic flowchart of a quality of service guarantee method according to still another embodiment of this application;
FIG. 7 is a schematic flowchart of a quality of service guarantee process in an application scenario 1 according to an embodiment of this application;
FIG. 8 is a schematic flowchart of a quality of service guarantee process in an application scenario 2 according to an embodiment of this application;
FIG. 9 is a structural diagram of another quality of service guarantee apparatus according to this application;
FIG. 10 is a structural diagram of another quality of service guarantee apparatus according to this application;
FIG. 11 is a structural diagram of another quality of service guarantee apparatus according to this application;
FIG. 12 is a structural diagram of another quality of service guarantee apparatus according to this application; and
FIG. 13 is a structural diagram of another communications device according to this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms "first", "second", and the like are intended to distinguish between similar objects but do not describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "and/or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6^{th} generation (6^{th} Generation, 6G) communications system.

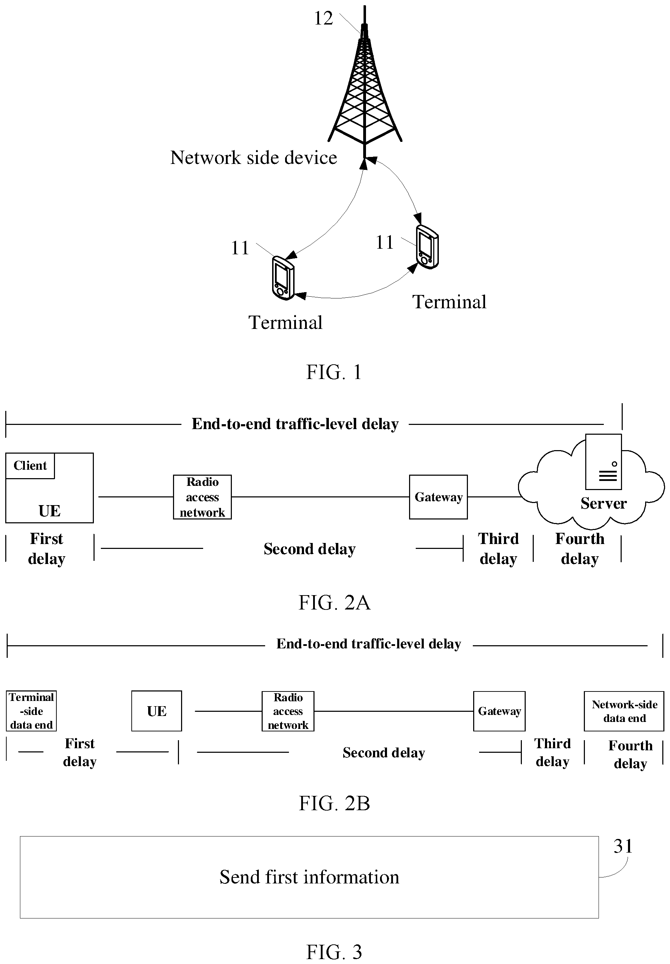

FIG. 1 is a block diagram of a wireless communications system to which embodiments of this application can be applied. The wireless communications system includes a terminal 11 and a network side device 12. The terminal 11 may also be referred to as a terminal device to user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (Vehicle User Equipment, VUE), or pedestrian user equipment (Pedestrian User Equipment, PUE). The wearable device includes a bracelet, a headset, and glasses. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless network communications technology (Wi-Fi) node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

In the embodiments of this application, optionally, obtaining may be understood as obtaining from a configuration, receiving, receiving through a request, obtaining through self-learning, deriving from unreceived information, or obtaining after processing based on received information. This may be specifically determined based on an actual requirement, and is not limited in the embodiments of this application. For example, when indication information of a capability sent by a device is not received, it may be deduced that the device does not support the capability.

Optionally, sending may include broadcasting, broadcasting in a system message, and returning after responding to a request.

In an embodiment of this application, a data channel may include but is not limited to one of the following: a protocol data unit (Protocol Data Unit, PDU) session, a public data network (Public Data Network, PDN) connection, a QoS flow, a bearer, and an Internet Protocol security (Internet Protocol Security, IPsec) channel, where the bearer may be an evolved radio access bearer (Evolved Radio Access Bearer, E-RAB), a radio access bearer (Evolved Radio Access Bearer, RAB), a data radio bearer (Data Radio Bearer, DRB), a signaling radio bearer (Signaling Radio Bearers, SRB), or the like.

In an optional embodiment of this application, a communications device may include at least one of the following: a communications network element and a terminal.

In an embodiment of this application, the communications network element may include at least one of the following: a core network element and a radio access network element.

In the embodiments of this application, the core network (Core Network, CN) element may include but is not limited to at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving Gateway, SGW), a PDN gateway (PDN Gateway, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), a unified data management (Unified Data Management, UDM), a unified data repository (Unified Data Repository, UDR), a home subscriber server (Home Subscriber Server, HSS), an application function (Application Function, AF), and a centralized network configuration (Centralized network configuration, CNC).

In the embodiments of this application, the radio access network (Radio Access Network, RAN) element may include but is not limited to at least one of the following: a radio access network device, a radio access network node, a radio access network function, a radio access network unit, a Third Generation Partnership Project (Third Generation Partnership Project, 3GPP) radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a base station (NodeB), a non-3GPP interworking function (Non-3GPP Inter Working Function, N3IWF), an access control (Access Controller, AC) node, an access point (Access Point, AP) device, a wireless local area network (Wireless Local Area Networks, WLAN) node, and an N3IWF.

As shown in FIG. 2A and FIG. 2B, an end-to-end traffic-level delay may be divided into a first delay, a second delay, a third delay, and a fourth delay.

As shown in FIG. 2A, first delay information includes delay information between a terminal-side data end and a terminal. The terminal-side data end may be located inside the terminal or outside the terminal. A delay between the terminal-side data end and the terminal includes a time required for data to pass between the terminal-side data end and the terminal.

Third delay information includes delay information between a gateway and a network-side data end, and a delay between a communications network and the network-side data end. A delay between the gateway and the network-side data end includes a time required for data to pass between the gateway and the network-side data end. A delay between the communications network and the network-side data end includes a time required for data to pass between the communications network and the network-side data end. The gateway may be a gateway in the communications network. The gateway includes at least one of the following: a UPF, for example, a platform security architecture (Platform Security Architecture, PSA).

Fourth delay information includes delay information within a network-side data end. The delay information within the network-side data end includes a time required for data to pass through the network-side data end.

As shown in FIG. 2A and FIG. 2B, second delay information includes one of the following: a delay between a terminal and a gateway, and a transmission delay within a communications network. The delay between the terminal and the gateway includes a time required for data to pass between the terminal and the gateway.

As shown in FIG. 2B, first delay information includes delay information within a terminal. The delay information within the terminal includes a time required for data to pass through the terminal.

Third delay information includes one of the following: a delay between a gateway and a server, and a delay between a communications network and the server. The delay between the gateway and the server includes a time required for data to pass between the gateway and the server. The delay between the communications network and the server includes a time required for data to pass between the communications network and the server. The gateway may be a gateway in the communications network. The gateway includes at least one of the following: a UPF (for example, a PSA).

Fourth delay information includes one of the following: delay information within a server. A delay within the server includes a time required for data to pass through the server.

Scenario 1: As a time-sensitive traffic appears, for example, an XR terminal (VR/AR, virtual reality/augmented reality), end-to-end delay guarantee rises in demand. However, traditional delay guarantee is static segmentation, and each segment is separately guaranteed. A communications network is generally responsible for guaranteeing a second delay. For example, an end-to-end traffic-level delay of an XR traffic is 50 ms, and a delay in the communications network (for example, a transmission delay between a terminal and a gateway) is only 10 ms. However, a computing delay within a server and a computing delay within a terminal exhibit a degree of scalability with different traffics, different computing requirements, and different terminal capabilities. Therefore, the second delay is guaranteed, and the overall end-to-end traffic-level delay may not meet a requirement (for example, exceeds 50 ms); or even if the second delay is not is guaranteed (for example, exceeds 10 ms), the overall end-to-end traffic-level delay may also meet a requirement (for example, within 50 ms).

Scenario 2: With emergence of cloud computing, distributed computing may exist between a client and a server. That is, a part of computing is performed on UE, and the other part of computing is performed on the server or all computing is uninstalled on the server. There is a correlation between a first delay and a fourth delay. The first delay and the fourth delay are not statically divided, and are traffic-related.

Therefore, the following problems need to be resolved:

### Problem 1:

Delay segmentation guarantee of static division is not flexible enough to meet a high-precision end-to-end delay guarantee requirement. How to improve traffic end-to-end delay guarantee is a technical problem that needs to be urgently resolved at present. With marginalization of a server, a service cloud formed by a network and the server is integrated. Manageable integration of the first delay (for example, a delay within UE), the second delay (for example, a delay between UE and a gateway), the third delay (for example, a delay between a gateway and a server), and the fourth delay (a delay within a server) is possible.

On solution is that, on a premise that the first delay and the third delay are relatively stable, the second delay and the fourth delay may affect a value of the other party. For example, when the fourth delay increases, the second delay may be reduced. The second delay may also affect a budget of the fourth delay.

### Problem 2:

End-to-end traffic-level delay guarantee undoubtedly requires more signaling control and resource scheduling. Therefore, it should only be applicable to a part of traffics and a part of UEs.

One solution is to restrict a traffic and UE by using subscription information.

Another solution is to perform requesting by using UE or a third-party agent (for example, an AF).

### Problem 3:

For some delay-sensitive traffics, it may not be necessary to initiate the traffics if end-to-end traffic-level delay guarantee fails.

One solution is that after end-to-end traffic-level delay guarantee succeeds, a terminal or a data end that initiates a traffic performs traffic sending.

In an implementation of the present invention, the fourth delay (for example, a delay within a server) = the traffic-level delay - the first delay (for example, a delay within UE) - the second delay - the third delay.

In an implementation of the present invention, the second delay = the traffic-level delay - the first delay (for example, a delay within UE) - the third delay - the fourth delay.

In an implementation of the present invention, the second delay may be a delay within a communications network, or may be referred to as a delay between a terminal and a gateway. The delay within the communications network identifies time required for data forwarding within the communications network.

In an implementation of the present invention, the third delay may be a delay between a gateway and a server or a delay between a gateway and a network-side data end. The third delay may be obtained by means of QoS measurement or a configured value, including a maximum value. The delay between the gateway and the server may include a maximum delay between the gateway and the server. The delay between the gateway and the network-side data end may include a maximum delay between the gateway and the network-side data end.

In an optional embodiment of this application, a concept of delay information and a concept of delay may be used interchangeably. The delay information may be used to represent a delay. In an optional embodiment of this application, the delay or the delay information may include at least one of the following: delay overheads or a delay budget. The delay budget (delay budget) is a delay that cannot exceed a delay budget requirement.

In an optional embodiment of this application, the delay may be a transmission delay and/or a computing delay. Therefore, the delay or the delay information may include at least one of the following: transmission delay overheads, a transmission delay budget, computing delay overheads, and a computing delay budget.

In an optional embodiment of this application, traffic-level QoS guarantee includes end-to-end QoS guarantee between the terminal-side data end and the network-side data end. In an implementation, the device-side data end includes a client, and the network-side data end includes a server end. In an implementation, the terminal-side data end may be a data source end, and the network-side data end may be a data destination end; or the terminal-side data end may be a data destination end, and the network-side data end may be a data source end. In a traffic, there is often bidirectional data, that is, a data end serves as both a data source end and a data destination end.

In an optional embodiment of this application, the terminal-side data end includes a data end connected to a terminal. The terminal-side data end may be located inside or outside the terminal. The network-side data end includes a data end connected to a communications network. The network-side data end may be located inside or outside the network.

In an optional embodiment of this application, the traffic-level delay includes the terminal-side data end and the network-side data end. The traffic-level delay guarantee includes that traffic-level delay overheads do not exceed a traffic-level delay budget.

It is not difficult to understand that the transmission delay within the communications network is only a part of a traffic-level delay of a service level, as shown in the second delay in FIG. 2A.

In the embodiments of this application, the delay information within the terminal may include at least one of the following: computing delay information within the terminal and transmission delay information within the terminal.

In the embodiments of this application, the delay information within the server may include at least one of the following: a computing delay within the server and a transmission delay within the server.

In the embodiments of this application, the delay information between the terminal-side data end and the terminal may include at least one of the following: computing delay information between the terminal-side data end and the terminal, transmission delay information between the terminal-side data end and the terminal, delay information within the terminal, and delay information within the terminal-side data end.

In the embodiments of this application, the delay information within the network-side data end may include at least one of the following: computing delay information within the network-side data end and transmission delay information within the network-side data end.

In an optional embodiment of this application, the delay information within the terminal-side data end may include at least one of the following: computing delay information within the terminal-side data end and transmission delay information within the terminal-side data end.

In an optional embodiment of this application, the object includes at least one of the following: a terminal, a service, information, data, a data channel, and a computing task. The object is an object of the terminal. For example, a first object is a first object of the terminal. For example, a second object is a second object of the terminal. For example, a target object is a target object of the terminal.

In an optional embodiment of this application, description information of the traffic (for example, traffic) includes at least one of the following: traffic type information, a fully qualified domain name (Fully Qualified Domain Name, FQDN), a source Internet Protocol (Internet Protocol, IP) address, a target IP address, a source port, a target end, a protocol number, a source multiple access channel (Multiple Access Channel, MAC) address, a target MAC address, a service application (Application, APP) identifier, an OS (Operating System) identifier, a packet detection rule (Packet Detection Rule, PDR), and a data network name (Data Network Name, DNN). For all items included in description information of a first traffic, description information of a second traffic, and description information of a target traffic, refer to the description information of the traffic.

In an optional embodiment of this application, description information of the information includes at least one of the following: an information type (for example, location information) and an information identifier. For all items included in description information of first information, description information of second information, and description information of target information, refer to the description information of the information.

In an optional embodiment of this application, description information of the data includes at least one of the following: a data type, a data identifier, an FQDN, a source IP address, a target IP address, a source port, a target end, a protocol number, a source MAC address, a target MAC address, an APP identifier of a service, an OS (Operating System) identifier, a PDR, and a DNN. For all items included in description information of first data, description information of second data, and description information of target data, refer to the description information of the data.

In an optional embodiment of this application, description information of the data channel includes at least one of the following: a channel type (such as a QoS flow, a DRB, or a PDU session) of the data channel, and an identifier (such as a PDU session identifier, a QoS flow identifier, or a DRB identifier) of the data channel. For all items included in description information of a first data channel, description information of a second data channel, and description information of a target data channel, refer to the description information of the data channel.

In an optional embodiment of this application, description information of the computing task includes at least one of the following: an identifier of the computing task and a computing power requirement of the computing task. For all items included in description information of a first computing task, description information of a second computing task, and description information of a target computing task, refer to the description information of the computing task.

In an optional embodiment of the present invention, the computing power requirement includes computing power resources that need to be consumed to complete the computing task.

In an optional embodiment of the present invention, a computing power may be represented by at least one of the following:
floating point operations (flops);
processor cores;
a multiply accumulate operation (Multiply Accumulate, MAC);
graphics processing unit cores;
a dominant frequency of the processor/the graphics processing unit;
a frequency multiplication of the processor/the graphics processing unit;
an integer unit of the processor/the graphics processing unit;
a floating point unit of the processor/the graphics processing unit; and
an output speed for computing the hash function.

In an optional embodiment of the present invention, computing power requirement information includes at least one of the following:
required floating point operations;
required cores of the processor;
a required multiply accumulate operation;
required cores of the graphics processing unit;
a required dominant frequency of the processor/the graphics processing unit;
a required frequency multiplication of the processor/the graphics processing unit;
a required integer unit of the processor/the graphics processing unit;
a required floating point unit of the processor/the graphics processing unit;
a required output speed for computing the hash function.

In an optional embodiment of the present invention, the server includes at least one of the following:
a computing power server, where the computing power server is configured to provide a computing power (including an edge computing power server) for a computing task and/or a service;
an application server (including an edge application server (EAS));
a server that provides a computing resource (including an edge computing resource server); and
a server that provides a computing capability (including an edge computing capability server).

Optionally, the description information of the traffic and/or the data is description information of the traffic and/or the data related to the delay information. The delay information within the UE is delay information within UE related to the description information of the traffic and/or the data. Delays in within the UE corresponding to different traffics and/or data may be different.

The following describes a quality of service guarantee method in the embodiments of this application.

Referring to FIG. 3, an embodiment of this application provides a quality of service guarantee method, applied to a first communications device. The first communications device includes but is not limited to UE, an AMF, and an AF. The method includes the following steps.

### Step 31: Send first information.

In this embodiment, the first information may include at least one of the following:
first request information, where the first request information is used to request to perform traffic-level QoS guarantee on a first object;
description information of the first object;
traffic-level QoS information;
first delay information, where the first delay information includes one of the following: delay information within a terminal, and delay information between a terminal-side data end and a terminal; and
fourth delay information, where the fourth delay information includes one of the following: delay information within a server, and delay information within a network-side data end, where
the first object includes at least one of the following: a terminal, a first traffic, first information, first data, a first data channel, and a first computing task; and
the description information of the first object includes at least one of the following: description information of the terminal, description information of the first traffic, description information of the first information, description information of the first data, description information of the first data channel, and description information of the first computing task.

In an implementation, a computing power requirement may be converted into a delay requirement in the server.

In an implementation, the terminal may send the first delay information and the fourth delay information. For example, in a scenario, when there is a requirement for segmentation computing of the terminal, a part of computing is performed on the terminal, and remaining computing is performed on the server side. The terminal may provide both the first delay information (for example, a computing delay within the terminal) and the fourth delay information (a computing delay within the server).

In another implementation, the terminal may send the fourth delay information. For example, in a scenario, the terminal uninstalls all computing into the server. In this case, the fourth delay information may be a computing delay within the server.

In another implementation, the first delay information and the fourth delay information may be sent by different first communications devices. For example, the terminal sends the first delay information, and a proxy (for example, an AF) on the server side sends the fourth delay information.

In another implementation, the first communications device provides the first delay information. In a case that a traffic-level delay is determined, a second communications device may derive the fourth delay information by using the first delay information.

In another implementation, the first communications device provides the fourth delay information. In a case that a traffic-level delay is determined, the second communications device may derive the first delay information by using the fourth delay information.

Optionally, the traffic-level QoS information includes a traffic-level delay. The traffic-level delay is also referred to as a traffic-level delay.

In an optional embodiment of this application, the traffic-level QoS or traffic-level QoS information includes an end-to-end delay between a data source end and a data local end.

Optionally, the delay information within the terminal includes at least one of the following: computing delay information within the terminal and transmission delay information within the terminal.
(1) Further, the computing delay within the terminal may include a computing delay (for example, required duration) of data, a traffic, and/or a computing task in the terminal.

In an implementation, the computing delay information within the terminal includes at least one of the following: computing delay overheads in the terminal and a computing delay budget in the terminal.

For example, the computing delay within the terminal includes a computing delay of a traffic or a computing task in the terminal. For example, in distributed computing, the terminal may carry a part of computing, and a part of computing is performed outside the terminal (for example, the server end or another terminal). In this case, the computing delay within the terminal is a part of an end-to-end delay of the traffic.

In another manner, the computing delay within the terminal may be zero. It is not difficult to understand that the terminal may offload all computing, for example, cloud computing, outside of the terminal. In addition, computing delays in the terminal that are corresponding to different traffics, data, and/or computing tasks may be different.

(2) Further, the transmission delay information within the terminal may include duration required for data forwarding in the terminal. For example, the transmission delay information within the terminal includes a delay before client data on the terminal is sent from the terminal to the communications network.

Optionally, the delay information within the server includes at least one of the following: a computing delay within the server and a transmission delay within the server.

Optionally, the delay information between the terminal-side data end and the terminal includes at least one of the following: computing delay information between the terminal-side data end and the terminal, transmission delay information between the terminal-side data end and the terminal, delay information within the terminal, and delay information within the terminal-side data end.

Further, the computing delay information between the terminal-side data end and the terminal may include a computing delay of data, a traffic, and/or a computing task between the terminal-side data end and the terminal.

Further, the transmission delay information between the terminal-side data end and the terminal may include duration required for data forwarding between the terminal-side data end and the terminal.

Optionally, the delay information within the network-side data end includes at least one of the following: computing delay information within the network-side data end and transmission delay information within the network-side data end.

Optionally, the delay information within the terminal-side data end includes at least one of the following: computing delay information within the terminal-side data end and transmission delay information within the terminal-side data end.

It should be noted that the terminal-side data end may be inside the terminal or outside the terminal. The data end may be a source end of data or a destination end of data.

In this embodiment of this application, the first communications device (for example, the terminal) may further receive a first response and/or traffic-level QoS guarantee start information, and send information and/or data of the first object or a target object according to the first response and/or the traffic-level QoS guarantee start information.

The first response is used to indicate that a first request is successfully responded to.

The traffic-level QoS guarantee start information includes at least one of the following: indication information indicating starting of traffic-level QoS guarantee, and description information of the target object for traffic-level QoS guarantee. The description information of the target object includes description information of a target traffic.

It is not difficult to understand that in this embodiment, in a case that a traffic-level delay budget is determined, when a part of delay overheads in a first delay, a second delay, a third delay, and/or a fourth delay change, a requirement of the traffic-level delay budget can be guaranteed by adjusting a remaining delay budget.

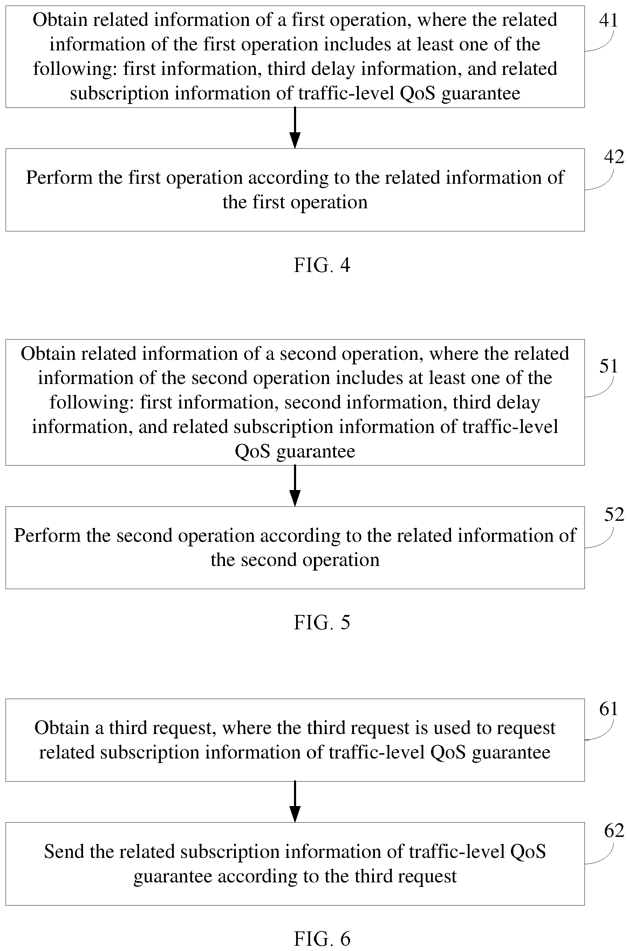

Referring to FIG. 4, an embodiment of this application further provides a quality of service guarantee method, applied to a second communications device. The second communications device includes but is not limited to a CN network element (for example, an SMF). The method includes the following steps.

Step 41: Obtain related information of a first operation, where the related information of the first operation includes at least one of the following: first information, third delay information, and related subscription information of traffic-level QoS guarantee.

The first information includes at least one of the following:
first request information, where the first request information is used to request to perform traffic-level QoS guarantee on a first object;
description information of the first object;
traffic-level QoS information;
first delay information, where the first delay information includes one of the following: delay information within a terminal, and delay information between a terminal-side data end and a terminal; and
fourth delay information, where the fourth delay information includes one of the following: delay information within a server, and delay information within a network-side data end, where
the first object includes at least one of the following: a terminal, a first traffic, first information, first data, a first data channel, and a first computing task; and
the description information of the first object includes at least one of the following: description information of the terminal, description information of the first traffic, description information of the first information, description information of the first data, description information of the first data channel, and description information of the first computing task.

The third delay information includes one of the following: a delay between a gateway and a server, a delay between a communications network and a server, a delay between a gateway and a network-side data end, and a delay between a communications network and a network-side data end.

Further, the delay between the gateway and the server includes a transmission delay between the gateway and the server.

Further, the delay between the communications network and the server includes a transmission delay between the communications network and the server.

Further, the delay between the gateway and the network-side data end includes a transmission delay between the gateway and the network-side data end.

Further, the delay between the communications network and the network-side data end includes a transmission delay between the communications network and the network-side data end.

A third delay may be delay overheads obtained by means of actual measurement or a configured delay budget.

Step 42: Perform the first operation according to the related information of the first operation.

The first operation includes at least one of the following:
determining to send second information or not to send second information;
determining or changing fourth delay information, where the fourth delay information includes one of the following: delay information within a server, and delay information within a network-side data end; and
determining or changing second delay information, where the second delay information includes one of the following: a delay between a terminal and a gateway, and a transmission delay within a communications network.

The second information includes at least one of the following:
second request information, where the second request information is used to request at least one of the following: performing traffic-level QoS guarantee on a second object, and generating or changing related policy information of traffic-level QoS guarantee;
description information of the second object;
traffic-level QoS information;
first delay information, where the first delay information includes one of the following: delay information within a terminal, and delay information between a terminal-side data end and a terminal;
third delay information; and
fourth delay information, where the fourth delay information includes one of the following: delay information within a server, and delay information within a network-side data end.

The second object includes at least one of the following: a terminal, a second traffic, second information, second data, a second data channel, and a second computing task.

The description information of the second object includes at least one of the following: description information of the terminal, description information of the second traffic, description information of the second information, description information of the second data, description information of the second data channel, and description information of the second computing task.

In an implementation, the first information does not include the delay information within the server, and the second communications device determines a delay within the server according to the related information of the first operation.

In an implementation, the related subscription information of traffic-level QoS guarantee includes at least one of the following:
allowing and/or requiring traffic-level QoS guarantee;
not allowing and/or not requiring traffic-level QoS guarantee;
description information of an object allowing and/or requiring traffic-level QoS guarantee; and
description information of an object not allowing and/or not requiring traffic-level QoS guarantee.

In an implementation, the related subscription information of traffic-level QoS guarantee is subscription information of a terminal, a service provider, and/or a third party to the traffic-level QoS guarantee operation.

In an implementation, the second communications device may obtain the first information from a first communications device, and further, may obtain different content in the first information from different first communications devices.

In an implementation, the traffic-level QoS information includes traffic-level QoS information of the second object.

In an implementation, the second object is the same as or different from the first object.

In another implementation, the second object is a traffic that is in the first object and that is allowed by the related subscription information of traffic-level QoS guarantee. For example, only some traffics in some first objects are allowed by the related subscription information of traffic-level QoS guarantee. It is not difficult to understand that in this case, the second object is a subset of the first object.

In this embodiment of this application, the foregoing step 42 may include: performing the first operation in a case that a first condition is met. The first condition includes at least one of the following that:
the related subscription information of traffic-level QoS guarantee allows traffic-level QoS guarantee to be performed on all or a part of traffics in the first object;
the related subscription information of traffic-level QoS guarantee allows traffic-level QoS guarantee to be performed on a terminal;
the first information is obtained;
a first delay changes;
a second delay changes;
a third delay changes;
a fourth delay changes;
a traffic-level delay changes; and
traffic-level delay guarantee cannot be met.

Further, that the traffic-level delay changes include at least one of the following: traffic-level delay overheads are close to or exceed a traffic-level delay budget, the traffic-level delay budget changes, and the traffic-level delay overheads increase.

In an implementation, that a delay changes includes at least one of the following: delay overheads are close to or exceed a delay budget, the delay budget changes, and the delay overheads increase. Further, that the traffic-level delay changes include at least one of the following: traffic-level delay overheads are close to or exceed a traffic-level delay budget, the traffic-level delay budget changes, and the traffic-level delay overheads increase.

The traffic-level delay includes the first delay, the second delay, the third delay, and the fourth delay. In an implementation, when the first delay and/or the third delay change, to avoid a case that traffic-level delay guarantee cannot be met, the traffic-level delay overheads can meet the traffic-level delay budget by adjusting a second delay budget and/or a fourth delay budget. In another implementation, when the fourth delay changes, the second delay budget may be adjusted. In another implementation, when the second delay changes, the fourth delay budget may be adjusted.

In this embodiment of this application, the second communications device may obtain the related policy information of traffic-level QoS guarantee. The related policy information of traffic-level QoS guarantee may include at least one of the following:
description information of a target object;
a policy control and charging (Policy Control and Charging, PCC) rule;
a QoS monitoring rule;
second delay information, where the second delay information includes one of the following: a delay between a terminal and a gateway, and a transmission delay within a communications network;
fourth delay information, where the fourth delay information includes one of the following: delay information within a server, and delay information within a network-side data end; and
a traffic-level delay.

Further, after obtaining the related policy information of traffic-level QoS guarantee, the second communications device may further perform a third operation according to the related policy information of traffic-level QoS guarantee. The third operation may include at least one of the following:
determining the second delay information, where the second delay information includes one of the following: a delay between a terminal and a gateway, and a transmission delay within a communications network;
determining the fourth delay information, where the fourth delay information includes one of the following: delay information within a server, and delay information within a network-side data end;
determining QoS guarantee requirement information in a server, where the QoS guarantee requirement information in the server includes the fourth delay information; and
determining related policy information used for traffic-level QoS guarantee of a user plane network element (for example, a gateway or a UPF).

Optionally, the second communications device may further send a first response and/or traffic-level QoS guarantee start information to the first communications device.

The first response is used to indicate that first request information is successfully responded to.

The traffic-level QoS guarantee start information includes at least one of the following: indication information indicating starting of traffic-level QoS guarantee, and description information of the target object for traffic-level QoS guarantee.

The target object includes at least one of the following: a terminal, a target traffic, target information, target data, a target data channel, and a target computing task.

The description information of the target object includes at least one of the following: description information of the target traffic, description information of the target information, description information of the target data, description information of the target data channel, and description information of the target computing task.

The target object is the same as or different from the first object. The target object is the same as or different from the second object.

Further, the determining or changing second delay information includes: requesting to change a second delay in a case that a second condition is met.

The second condition includes at least one of the following that: a first delay changes, a third delay changes, a fourth delay changes, a traffic-level delay changes, and traffic-level delay guarantee cannot be met.

Further, the operation of determining or changing fourth delay information includes: requesting to change the fourth delay information in a case that a third condition is met.

The third condition includes at least one of the following that: a first delay changes, a second delay changes, a third delay changes, a traffic-level delay changes, and traffic-level delay guarantee cannot be met.

It is not difficult to understand that in this embodiment, in a case that a traffic-level delay budget is determined, when a part of delay in a first delay, a second delay, a third delay, and/or a fourth delay change, a requirement of the traffic-level delay budget can be guaranteed by adjusting a remaining delay.

Referring to FIG. 5, an embodiment of this application further provides a quality of service guarantee method, applied to a third communications device. The third communications device includes but is not limited to a CN network element (for example, a PCF). The method includes the following steps.

Step 51: Obtain related information of a second operation, where the related information of the second operation includes at least one of the following: first information, second information, third delay information, and related subscription information of traffic-level QoS guarantee.

It should be noted that either the first information or the second information exists in a specific embodiment. It is not difficult to understand that the first communications device may include the first information in a request sent to the third communications device. The second communications device may include the second information in a request sent to the third communications device.

The first information includes at least one of the following:
first request information, where the first request information is used to request to perform traffic-level QoS guarantee on a first object;
description information of the first object;
traffic-level QoS information;
first delay information, where the first delay information includes one of the following: delay information within a terminal, and delay information between a terminal-side data end and a terminal;
fourth delay information, where the fourth delay information includes one of the following: delay information in a server, and delay information in a network-side data end.

The first object includes at least one of the following: a terminal, a first traffic, first information, first data, a first data channel, and a first computing task.

The description information of the first object includes at least one of the following: description information of the terminal, description information of the first traffic, description information of the first information, description information of the first data, description information of the first data channel, and description information of the first computing task.

The third delay information includes one of the following: a delay between a gateway and a server, a delay between a communications network and a server, a delay between a gateway and a network-side data end, and a delay between a communications network and a network-side data end.

The second information includes at least one of the following:
second request information, where the second request information is used to request at least one of the following: performing traffic-level QoS guarantee on a second object, and generating or changing related policy information of traffic-level QoS guarantee;
description information of the second object;
traffic-level QoS information;
first delay information, where the first delay information includes one of the following: delay information within a terminal, and delay information between a terminal-side data end and a terminal;
third delay information; and
fourth delay information, where the fourth delay information includes one of the following: delay information within a server, and delay information within a network-side data end.

The second object includes at least one of the following: a terminal, a second traffic, second information, second data, a second data channel, and a second computing task.

The description information of the second object includes at least one of the following: description information of the terminal, description information of the second traffic, description information of the second information, description information of the second data, description information of the second data channel, and description information of the second computing task.

The second object is the same as or different from the first object.

Step 52: Perform the second operation according to the related information of the second operation.

The second operation includes at least one of the following:
determining to generate or change related policy information of traffic-level QoS guarantee;
determining or changing fourth delay information, where the fourth delay information includes one of the following: delay information within a server, and delay information within a network-side data end;
determining or changing second delay information, where the second delay information includes one of the following: a delay between a terminal and a gateway, and a transmission delay within a communications network;
determining a PCC rule; and
determining QoS guarantee requirement information in a server, where the QoS guarantee requirement information in the server includes the fourth delay information.

The third delay information includes one of the following: a delay between a gateway and a server, a delay between a communications network and a server, a delay between a gateway and a network-side data end, and a delay between a communications network and a network-side data end.

Optionally, the QoS guarantee requirement information in the server includes a delay within the server.

Optionally, the foregoing step 52 may include: in a case that a fourth condition is met, determining to generate or change the related policy information for traffic-level QoS guarantee.

The fourth condition includes at least one of the following that:
the related subscription information of traffic-level QoS guarantee allows traffic-level QoS guarantee to be performed on all or a part of services in the first object, or the related subscription information of traffic-level QoS guarantee allows traffic-level QoS guarantee to be performed on all or a part of services in the second object;
the related subscription information of traffic-level QoS guarantee allows traffic-level QoS guarantee to be performed on a terminal;
the first information is obtained, or the second information is obtained;
a first delay changes;
a second delay changes;
a third delay changes;
a fourth delay changes;
a traffic-level delay changes; and
traffic-level delay guarantee cannot be met.

Optionally, when determining to generate or change the related policy information for traffic-level QoS guarantee, the third communications device may further send the related policy information for traffic-level QoS guarantee. The related policy information of traffic-level QoS guarantee includes at least one of the following:
description information of a target object;
a PCC rule;
a QoS monitoring rule;
second delay information, where the second delay information includes one of the following: a delay between a terminal and a gateway, and a transmission delay within a communications network;
fourth delay information, where the fourth delay information includes one of the following: delay information within a server, and delay information within a network-side data end; and
a traffic-level delay.

It is not difficult to understand that in this embodiment, in a case that a traffic-level delay budget is determined, when a part of delay in a first delay, a second delay, a third delay, and/or a fourth delay change, a requirement of the traffic-level delay budget can be guaranteed by adjusting a remaining delay.

Referring to FIG. 6, an embodiment of this application further provides a quality of service guarantee method, applied to a fourth communications device. The fourth communications device includes a CN network element (for example, a UDM). The method includes the following steps.

Step 61: Obtain a third request, where the third request is used to request related subscription information of traffic-level QoS guarantee.

Optionally, the third request may be a registration/subscription data obtaining/subscription request.

Optionally, the related subscription information of traffic-level QoS guarantee includes at least one of the following:
allowing and/or requiring traffic-level QoS guarantee;
not allowing and/or not requiring traffic-level QoS guarantee;
description information of an object allowing and/or requiring traffic-level QoS guarantee; and
description information of an object not allowing and/or not requiring traffic-level QoS guarantee.

In an implementation, the related subscription information of traffic-level QoS guarantee is subscription information of a terminal, a service provider, and/or a third party to the traffic-level QoS guarantee operation.

Step 62: Send the related subscription information of traffic-level QoS guarantee according to the third request.

Optionally, the related subscription information of traffic-level QoS guarantee may further include description information of an object allowing and/or requiring traffic-level QoS guarantee. The object includes at least one of the following: a terminal, a traffic, information, data, and a data channel.

It is not difficult to understand that, in this embodiment, it may be requested to obtain related subscription information of traffic-level QoS guarantee, so that a traffic-level QoS guarantee requirement is met.

The following describes the method provided in the embodiments of this application with reference to specific application scenarios.

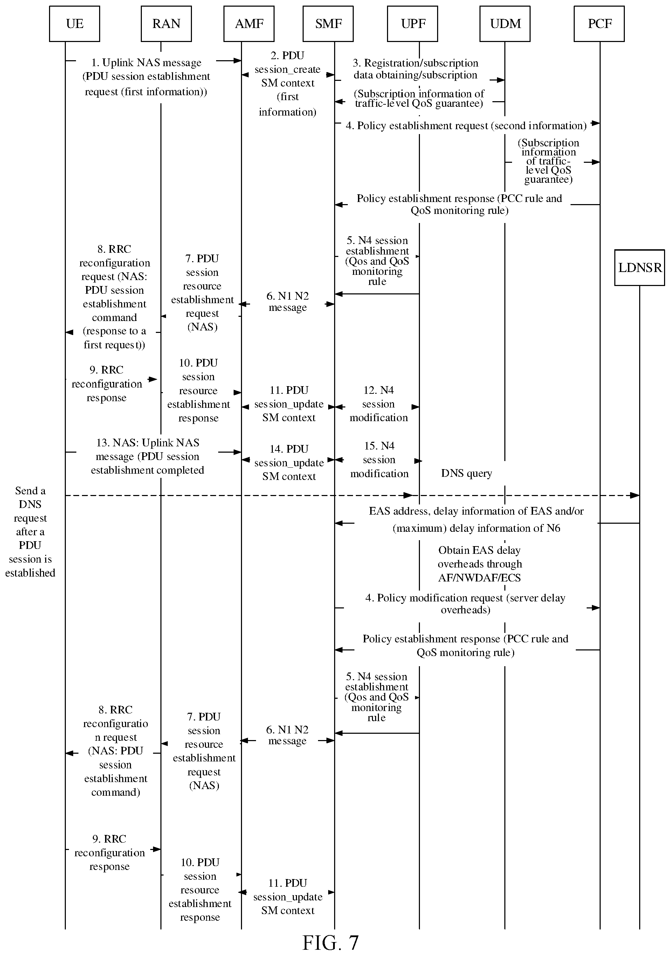

In scenario 1 of this application, as shown in FIG. 7, a specific quality of service guarantee process may include the following steps:
Step 71: UE sends an uplink NAS message to an AMF by using a RAN, where the uplink NAS message may include a PDU session establishment request. The PDU session request includes first information, as described in the embodiment of FIG. 3.
Step 72: The AMF sends PDU session create SM context information including the first information to an SMF.

It should be noted that for content included in the first information in step 71 and step 72, refer to the foregoing embodiment. Details are not described herein again.

Step 73: The SMF obtains related information of a first operation, where for example, the related information includes at least one of the following: the first information, second delay information, and subscription information of traffic-level QoS guarantee for the UE; and performs the first operation according to the related information of the first operation. In addition, the SMF sends a registration/subscription data obtaining/subscription request to a UDM, to request to obtain the subscription information of traffic-level QoS guarantee from the UDM.

For the second delay information, the subscription information of traffic-level QoS guarantee for the UE, and the first operation in step 73, refer to the foregoing embodiment. Details are not described herein again.

Step 74: The SMF sends a policy establishment request to a PCF, where the policy establishment request includes second information, and obtains a policy establishment response from the PCF. The policy establishment response may include related policy information of traffic-level QoS guarantee.

The PCF may obtain the subscription information of traffic-level QoS guarantee from the UDM.

The PCF may perform a second operation based on related information of the second operation. For example, the related information includes the second information and/or the second delay information. For the second operation, refer to the foregoing embodiment. Details are not described herein again.

The SMF may perform a third operation according to the related policy information of traffic-level QoS guarantee.

The third operation includes at least one of the following:
determining the second delay information, where the second delay information includes one of the following: a delay between a terminal and a gateway, and a transmission delay within a communications network;
determining the fourth delay information, where the fourth delay information includes one of the following: delay information within a server, and delay information within a network-side data end;
determining QoS guarantee requirement information in a server, where the QoS guarantee requirement information in the server includes the fourth delay information; and
determining related policy information used for traffic-level QoS guarantee of a user plane network element.

In an implementation, the PCF first determines a first delay, and the SMF can determine a delay budget within a server according to an end-to-end traffic-level delay, the first delay, and a second delay.

In another implementation, the SMF first determines a delay within a server, sends the server delay to the PCF, and the PCF determines the first delay. The SMF may determine, according to a computing power sensing network element, a computing power resource and the delay within the server that are required by a first traffic.

Step 75: The SMF sends the related policy information of traffic-level QoS guarantee to the UPF by using an N4 session establishment request, and obtains acknowledgement information returned by the UPF.

Steps 76, 77, and 78: The SMF sends a first response and/or traffic-level QoS guarantee start information to the UE by using the AMF, the RAN, and the like. The first response is used to indicate that a first request is successfully responded to.

Then, the UE sends data of a target traffic according to the first response and/or the traffic-level QoS guarantee start information. After receiving the data of the target traffic sent by the UE, the UPF executes a related policy of traffic-level QoS guarantee (for example, QoS monitoring).

It can be understood that other steps in FIG. 7 are procedures such as existing session establishment and modification, and details are not described herein.

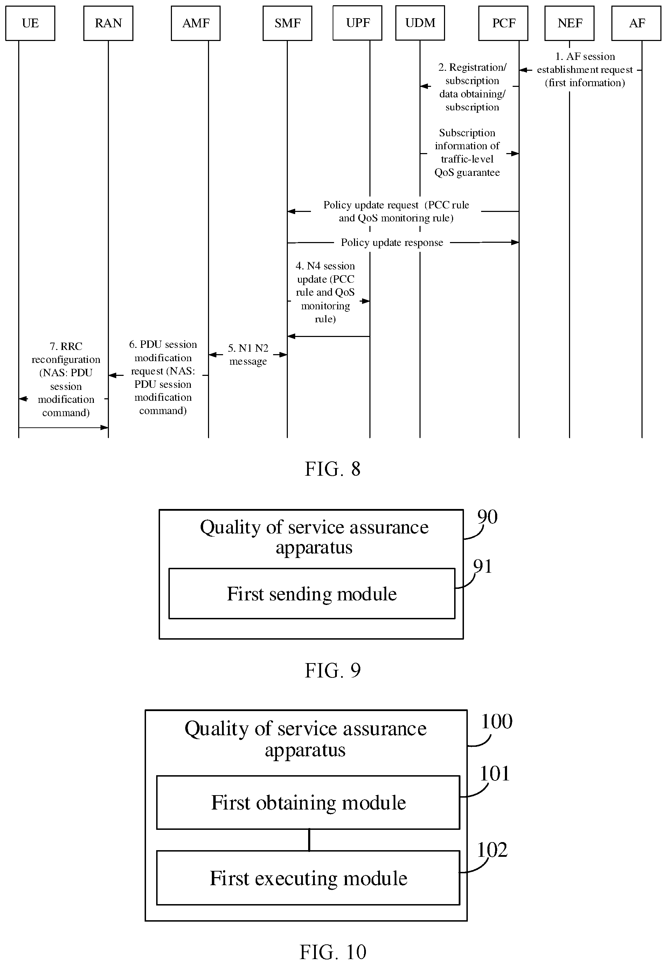

In scenario 2 of this application, as shown in FIG. 8, a specific quality of service guarantee process may include the following steps:

Step 81: An AF sends an AF session establishment request to a PCF by using a network exposure function (Network Exposure Function, NEF), where the AF session establishment request includes first information, as described in the embodiment in FIG. 3.

It should be noted that for content included in the first information in step 81, refer to the foregoing embodiment. Details are not described herein again.

Step 82: The PCF obtains related information of a second operation, where for example, the related information includes at least one of the following: the first information, second delay information, and subscription information of traffic-level QoS guarantee for UE; and performs the second operation according to the related information of the second operation. In addition, the PCFF sends a registration/subscription data obtaining/subscription request to a UDM, to request to obtain the subscription information of traffic-level QoS guarantee from the UDM.

For the second delay information, the subscription information of traffic-level QoS guarantee for the UE, and the second operation in step 82, refer to the foregoing embodiment. Details are not described herein again.

Optionally, when it is determined to generate related policy information of traffic-level QoS guarantee, step 83 is performed.

Step 83: The PCF sends the related policy information of traffic-level QoS guarantee to an SMF by using a policy update request, and obtains a policy update response returned by the SMF.

The SMF generates, according to the related policy information of traffic-level QoS guarantee, related policy information used for traffic-level QoS guarantee on a UPF.

Step 84: The SMF sends the related policy information for traffic-level QoS guarantee to the UPF by using an N4 session establishment request, and obtains acknowledgement information returned by the UPF.

Steps 85, 86, and 87: The SMF sends a first response and/or traffic-level QoS guarantee start information to the UE by using the AMF, the RAN, and the like. The first response is used to indicate that a first request is successfully responded to.

Then, the UE sends data of a target traffic according to the first response and/or the traffic-level QoS guarantee start information. After receiving the data of the target traffic sent by the UE, the UPF performs privacy protection before forwarding.

It can be understood that other steps in FIG. 8 are procedures such as existing session establishment and modification, and details are not described herein.

Referring to FIG. 9, an embodiment of this application provides a quality of service guarantee apparatus, applied to a first communications device. As shown in FIG. 9, a quality of service guarantee apparatus 90 includes:
a first sending module 91, configured to send first information, where
the first information includes at least one of the following:
   first request information, where the first request information is used to request to perform traffic-level QoS guarantee on a first object;
   description information of the first object;
   traffic-level QoS information;
   first delay information, where the first delay information includes one of the following: delay information within a terminal, and delay information between a terminal-side data end and a terminal; and
   fourth delay information, where the fourth delay information includes one of the following: delay information within a server, and delay information within a network-side data end, where
   the first object includes at least one of the following: a terminal, a first traffic, first information, first data, a first data channel, and a first computing task; and
   the description information of the first object includes at least one of the following: description information of the terminal, description information of the first traffic, description information of the first information, description information of the first data, description information of the first data channel, and description information of the first computing task.

Optionally, the traffic-level QoS information includes a traffic-level delay.

Optionally, the delay information within the terminal includes at least one of the following: computing delay information within the terminal and transmission delay information within the terminal; and/or
the delay information within the server includes at least one of the following: a computing delay within the server and a transmission delay within the server; and/or
the delay information between the terminal-side data end and the terminal includes at least one of the following: computing delay information between the terminal-side data end and the terminal, transmission delay information between the terminal-side data end and the terminal, delay information within the terminal, and delay information within the terminal-side data end; and/or
the delay information within the network-side data end includes at least one of the following: computing delay information within the network-side data end and transmission delay information within the network-side data end; and/or
the delay information within the terminal-side data end includes at least one of the following: computing delay information within the terminal-side data end and transmission delay information within the terminal-side data end.

Optionally, the quality of service guarantee apparatus 90 further includes:
a first receiving module, configured to receive a first response and/or traffic-level QoS guarantee start information; and
the first sending module 91 is further configured to send information and/or data of the first object or a target object according to the first response and/or the traffic-level QoS guarantee start information, where
the first response is used to indicate that a first request is successfully responded to; and
the traffic-level QoS guarantee start information includes at least one of the following: indication information indicating starting of traffic-level QoS guarantee, and description information of the target object for traffic-level QoS guarantee.

In this embodiment, the quality of service guarantee apparatus 90 can implement the processes implemented in the method embodiment in FIG. 3 of this application, and achieve a same technical effect. To avoid repetition, details are not described herein again.

Referring to FIG. 10, an embodiment of this application provides a quality of service guarantee apparatus, applied to a second communications device. As shown in FIG. 10, a quality of service guarantee apparatus 100 includes:
a first obtaining module 101, configured to obtain related information of a first operation, where the related information of the first operation includes at least one of the following: first information, third delay information, and related subscription information of traffic-level QoS guarantee; and
a first executing module 102, configured to perform the first operation according to the related information of the first operation, where
the first operation includes at least one of the following:
   determining to send second information or not to send second information;
   determining or changing fourth delay information, where the fourth delay information includes one of the following: delay information within a server, and delay information within a network-side data end; and
   determining or changing second delay information, where the second delay information includes one of the following: a delay between a terminal and a gateway, and a transmission delay within a communications network;
   the first information includes at least one of the following:
      first request information, where the first request information is used to request to perform traffic-level QoS guarantee on a first object;
      description information of the first object;
      traffic-level QoS information;
      first delay information, where the first delay information includes one of the following: delay information within a terminal, and delay information between a terminal-side data end and a terminal; and
      fourth delay information, where the fourth delay information includes one of the following: delay information within a server, and delay information within a network-side data end, where
      the first object includes at least one of the following: a terminal, a first traffic, first information, first data, a first data channel, and a first computing task; and
      the description information of the first object includes at least one of the following: description information of the terminal, description information of the first traffic, description information of the first information, description information of the first data, description information of the first data channel, and description information of the first computing task;
      the third delay information includes one of the following: a delay between a gateway and a server, a delay between a communications network and a server, a delay between a gateway and a network-side data end, and a delay between a communications network and a network-side data end; and
      the second information includes at least one of the following:
         second request information, where the second request information is used to request at least one of the following: performing traffic-level QoS guarantee on a second object, and generating or changing related policy information of traffic-level QoS guarantee;
         description information of the second object;
         traffic-level QoS information;
         first delay information, where the first delay information includes one of the following: delay information within a terminal, and delay information between a terminal-side data end and a terminal;
         third delay information; and
         fourth delay information, where the fourth delay information includes one of the following: delay information within a server, and delay information within a network-side data end, where
         the second object includes at least one of the following: a terminal, a second traffic, second information, second data, a second data channel, and a second computing task; and
         the description information of the second object includes at least one of the following: description information of the terminal, description information of the second traffic, description information of the second information, description information of the second data, description information of the second data channel, and description information of the second computing task, where
         the second object is the same as or different from the first object.

Optionally, the first executing module 102 is further configured to:
performing the first operation in a case that a first condition is met, where
the first condition includes at least one of the following that:
   the related subscription information of traffic-level QoS guarantee allows traffic-level QoS guarantee to be performed on all or a part of traffics in the first object;
   the related subscription information of traffic-level QoS guarantee allows traffic-level QoS guarantee to be performed on a terminal;
   the first information is obtained;
   a first delay changes;
   a second delay changes;
   a third delay changes;
   a fourth delay changes;
   a traffic-level delay changes; and
   traffic-level delay guarantee cannot be met.

Optionally, the first obtaining module 101 is further configured to:
obtain the related policy information of traffic-level QoS guarantee, where
the related policy information of traffic-level QoS guarantee includes at least one of the following:
   description information of a target object;
   a policy control and charging PCC rule;
   a QoS monitoring rule;
   second delay information, where the second delay information includes one of the following: a delay between a terminal and a gateway, and a transmission delay within a communications network;
   fourth delay information, where the fourth delay information includes one of the following: delay information within a server, and delay information within a network-side data end; and
   a traffic-level delay.

Optionally, the first executing module 102 is further configured to:
perform a third operation according to the related policy information of traffic-level QoS guarantee, where
the third operation includes at least one of the following:
   determining the second delay information, where the second delay information includes one of the following: a delay between a terminal and a gateway, and a transmission delay within a communications network;
   determining the fourth delay information, where the fourth delay information includes one of the following: delay information within a server, and delay information within a network-side data end;
   determining QoS guarantee requirement information in a server, where the QoS guarantee requirement information in the server includes the fourth delay information; and
   determining related policy information used for traffic-level QoS guarantee of a user plane network element.

Optionally, the quality of service guarantee apparatus 100 further includes:
a second sending module, configured to send a first response and/or traffic-level QoS guarantee start information to a first communications device, where
the first response is used to indicate that first request information is successfully responded to; and
the traffic-level QoS guarantee start information includes at least one of the following: indication information indicating starting of traffic-level QoS guarantee, and description information of the target object for traffic-level QoS guarantee, where
the target object includes at least one of the following: a terminal, a target traffic, target information, target data, a target data channel, and a target computing task; and
the description information of the target object includes at least one of the following: description information of the target traffic, description information of the target information, description information of the target data, description information of the target data channel, and description information of the target computing task, where
the target object is the same as or different from the first object; and
the target object is the same as or different from the second object.

Optionally, the first executing module 102 is further configured to:
request to change a second delay in a case that a second condition is met, where
the second condition includes at least one of the following that: a first delay changes, a third delay changes, a fourth delay changes, a traffic-level delay changes, and traffic-level delay guarantee cannot be met.

Optionally, the first executing module 102 is further configured to:
request to change the fourth delay information in a case that a third condition is met, where
the third condition includes at least one of the following that: a first delay changes, a second delay changes, a third delay changes, a traffic-level delay changes, and traffic-level delay guarantee cannot be met.

In this embodiment, the quality of service guarantee apparatus 100 can implement the processes implemented in the method embodiment in FIG. 4 of this application, and achieve a same technical effect. To avoid repetition, details are not described herein again.

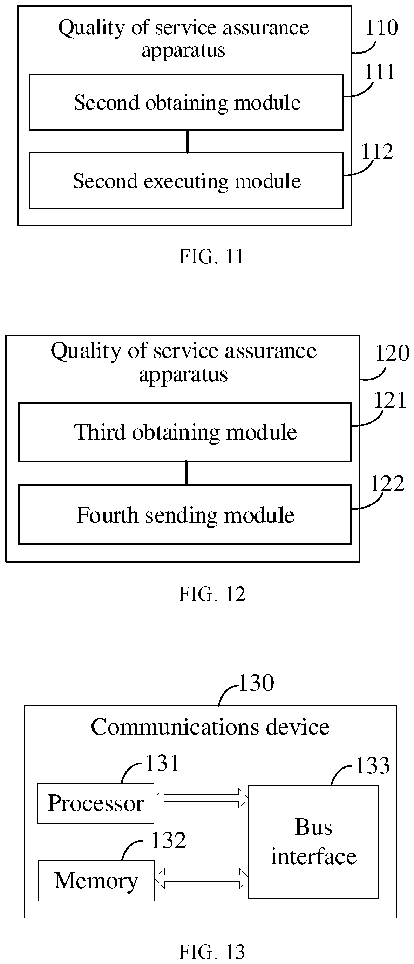

Referring to FIG. 11, an embodiment of this application provides a quality of service guarantee apparatus, applied to a third communications device. As shown in FIG. 11, a quality of service guarantee apparatus 110 includes:
a second obtaining module 111, configured to obtain related information of a second operation, where the related information of the second operation includes at least one of the following: first information, second information, third delay information, and related subscription information of traffic-level QoS guarantee; and
a second executing module 112, configured to perform the second operation according to the related information of the second operation, where
the second operation includes at least one of the following:
   determining to generate or change related policy information of traffic-level QoS guarantee;
   determining or changing fourth delay information, where the fourth delay information includes one of the following: delay information within a server, and delay information within a network-side data end;
   determining or changing second delay information, where the second delay information includes one of the following: a delay between a terminal and a gateway, and a transmission delay within a communications network;
   determining a PCC rule; and
   determining QoS guarantee requirement information in a server, where the QoS guarantee requirement information in the server includes the fourth delay information;
   the third delay information includes one of the following: a delay between a gateway and a server, a delay between a communications network and a server, a delay between a gateway and a network-side data end, and a delay between a communications network and a network-side data end;
   the first information includes at least one of the following:
      first request information, where the first request information is used to request to perform traffic-level QoS guarantee on a first object;
      description information of the first object;
      traffic-level QoS information;
      first delay information, where the first delay information includes one of the following: delay information within a terminal, and delay information between a terminal-side data end and a terminal; and
      fourth delay information, where the fourth delay information includes one of the following: delay information within a server, and delay information within a network-side data end, where
      the first object includes at least one of the following: a terminal, a first traffic, first information, first data, a first data channel, and a first computing task; and
      the description information of the first object includes at least one of the following: description information of the terminal, description information of the first traffic, description information of the first information, description information of the first data, description information of the first data channel, and description information of the first computing task; and
      the second information includes at least one of the following:
         second request information, where the second request information is used to request at least one of the following: performing traffic-level QoS guarantee on a second object, and generating or changing related policy information of traffic-level QoS guarantee;
         description information of the second object;
         traffic-level QoS information;
         first delay information, where the first delay information includes one of the following: delay information within a terminal, and delay information between a terminal-side data end and a terminal;
         third delay information; and
         fourth delay information, where the fourth delay information includes one of the following: delay information within a server, and delay information within a network-side data end, where
         the second object includes at least one of the following: a terminal, a second traffic, second information, second data, a second data channel, and a second computing task; and
         the description information of the second object includes at least one of the following: description information of the terminal, description information of the second traffic, description information of the second information, description information of the second data, description information of the second data channel, and description information of the second computing task, where
         the second object is the same as or different from the first object.

Optionally, the QoS guarantee requirement information in the server includes a delay within the server.

Optionally, the second executing module 112 is further configured to:
in a case that a fourth condition is met, determine to generate or change the related policy information of traffic-level QoS guarantee, where
the fourth condition includes at least one of the following that:
   the related subscription information of traffic-level QoS guarantee allows traffic-level QoS guarantee to be performed on all or a part of services in the first object, or the related subscription information of traffic-level QoS guarantee allows traffic-level QoS guarantee to be performed on all or a part of services in the second object;
   the related subscription information of traffic-level QoS guarantee allows traffic-level QoS guarantee to be performed on a terminal;
   the first information is obtained, or the second information is obtained;
   a first delay changes;
   a second delay changes;
   a third delay changes;
   a fourth delay changes;
   a traffic-level delay changes; and
   traffic-level delay guarantee cannot be met.

Optionally, the quality of service guarantee apparatus 110 further includes:
a third sending module, configured to send the related policy information of traffic-level QoS guarantee, where
the related policy information of traffic-level QoS guarantee includes at least one of the following:
   description information of a target object;
   a PCC rule;
   a QoS monitoring rule;
   second delay information, where the second delay information includes one of the following: a delay between a terminal and a gateway, and a transmission delay within a communications network;
   fourth delay information, where the fourth delay information includes one of the following: delay information within a server, and delay information within a network-side data end; and
   a traffic-level delay.

In this embodiment, the quality of service guarantee apparatus 110 can implement the processes implemented in the method embodiment in FIG. 5 of this application, and achieve a same technical effect. To avoid repetition, details are not described herein again.

Referring to FIG. 12, an embodiment of this application provides a quality of service guarantee apparatus, applied to a fourth communications device. As shown in FIG. 12, a quality of service guarantee apparatus 120 includes:
a third obtaining module 121, configured to obtain a third request, where the third request is used to request related subscription information of traffic-level QoS guarantee; and
a fourth sending module 122, configured to send the related subscription information of traffic-level QoS guarantee according to the third request.

Optionally, the related subscription information of traffic-level QoS guarantee includes at least one of the following:
allowing and/or requiring traffic-level QoS guarantee;
not allowing and/or not requiring traffic-level QoS guarantee;
description information of an object allowing and/or requiring traffic-level QoS guarantee; and
description information of an object not allowing and/or not requiring traffic-level QoS guarantee.

In an implementation, the related subscription information of traffic-level QoS guarantee is subscription information of a terminal, a service provider, and/or a third party to the traffic-level QoS guarantee operation.

Optionally, the related subscription information of traffic-level QoS guarantee includes description information of an object allowing and/or requiring traffic-level QoS guarantee, where
the object includes at least one of the following: a terminal, a traffic, information, data, and a data channel.

In this embodiment, the quality of service guarantee apparatus 120 can implement the processes implemented in the method embodiment in FIG. 6 of this application, and achieve a same technical effect. To avoid repetition, details are not described herein again.

Referring to FIG. 13, FIG. 13 is a schematic structural diagram of another communications device according to an embodiment of this application. As shown in FIG. 13, the communications device 130 includes a processor 131, a memory 132, and a computer program that is stored in the memory 132 and executable on the processor. Components in the communications device 130 are coupled together by using a bus interface 133. When the computer program is executed by the processor 131, the processes implemented in the method embodiment shown in FIG. 3 may be implemented, or the processes implemented in the method embodiment shown in FIG. 4 are implemented, or the processes implemented in the method embodiment shown in FIG. 5 are implemented, or the processes implemented in the method embodiment shown in FIG. 6 are implemented, and a same technical effect can be achieved. To avoid repetition, details are not described herein again.

An embodiment of this application further provides a computer-readable storage medium. The readable storage medium may be non-volatile or may be volatile. The computer-readable storage medium stores a computer program, and the computer program is executed by a processor to implement the processes implemented in the method embodiment shown in FIG. 5, or implement the processes implemented in the method embodiment shown in FIG. 6, or implement the processes implemented in the method embodiment shown in FIG. 7, or implement the processes implemented in the method embodiment shown in FIG. 8, or implement the processes implemented in the method embodiment shown in FIG. 9, and a same technical effect can be achieved. To avoid repetition, details are not described herein again. The computer-readable storage medium includes a read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction of a network side device to implement the processes of the foregoing method embodiment and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product is stored in a non-transitory readable storage medium, and the computer program product is executed by at least one processor to implement the processes of the foregoing method embodiment, and a same technical effect can be achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A quality of service guarantee method, applied to a first communications device and comprising:
sending first information, wherein
the first information comprises at least one of the following:
first request information, wherein the first request information is used to request to perform traffic-level QoS guarantee on a first object;
description information of the first object;
traffic-level QoS information;
first delay information, wherein the first delay information comprises one of the following: delay information within a terminal, and delay information between a terminal-side data end and a terminal; and
fourth delay information, wherein the fourth delay information comprises one of the following: delay information within a server, and delay information within a network-side data end, wherein
the first object comprises at least one of the following: a terminal, a first traffic, first information, first data, a first data channel, and a first computing task; and
the description information of the first object comprises at least one of the following: description information of the terminal, description information of the first traffic, description information of the first information, description information of the first data, description information of the first data channel, and description information of the first computing task.

2. The method according to claim 1, wherein the traffic-level QoS information comprises a traffic-level delay.

3. The method according to claim 1, wherein the delay information within the terminal comprises at least one of the following: computing delay information within the terminal and transmission delay information within the terminal;
and/or
the delay information within the server comprises at least one of the following: a computing delay within the server and a transmission delay within the server;
and/or
the delay information between the terminal-side data end and the terminal comprises at least one of the following: computing delay information between the terminal-side data end and the terminal, transmission delay information between the terminal-side data end and the terminal, delay information within the terminal, and delay information within the terminal-side data end;
and/or
the delay information within the network-side data end comprises at least one of the following: computing delay information within the network-side data end and transmission delay information within the network-side data end;
and/or
the delay information within the terminal-side data end comprises at least one of the following: computing delay information within the terminal-side data end and transmission delay information within the terminal-side data end.

4. The method according to claim 1, wherein the method further comprises:
receiving a first response and/or traffic-level QoS guarantee start information; and
sending information and/or data of the first object or a target object according to the first response and/or the traffic-level QoS guarantee start information, wherein
the first response is used to indicate that a first request is successfully responded to; and
the traffic-level QoS guarantee start information comprises at least one of the following: indication information indicating starting of traffic-level QoS guarantee, and description information of the target object for traffic-level QoS guarantee.

5. A quality of service guarantee method, applied to a second communications device and comprising:
obtaining related information of a first operation, wherein the related information of the first operation comprises at least one of the following: first information, third delay information, and related subscription information of traffic-level QoS guarantee; and
performing the first operation according to the related information of the first operation, wherein
the first operation comprises at least one of the following:
determining to send second information or not to send second information;
determining or changing fourth delay information, wherein the fourth delay information comprises one of the following: delay information within a server, and delay information within a network-side data end; and
determining or changing second delay information, wherein the second delay information comprises one of the following: a delay between a terminal and a gateway, and a transmission delay within a communications network;
the first information comprises at least one of the following:
first request information, wherein the first request information is used to request to perform traffic-level QoS guarantee on a first object;
description information of the first object;
traffic-level QoS information;
first delay information, wherein the first delay information comprises one of the following: delay information within a terminal, and delay information between a terminal-side data end and a terminal; and
fourth delay information, wherein the fourth delay information comprises one of the following: delay information within a server, and delay information within a network-side data end, wherein
the first object comprises at least one of the following: a terminal, a first traffic, first information, first data, a first data channel, and a first computing task; and
the description information of the first object comprises at least one of the following: description information of the terminal, description information of the first traffic, description information of the first information, description information of the first data, description information of the first data channel, and description information of the first computing task;
the third delay information comprises one of the following: a delay between a gateway and a server, a delay between a communications network and a server, a delay between a gateway and a network-side data end, and a delay between a communications network and a network-side data end; and
the second information comprises at least one of the following:
second request information, wherein the second request information is used to request at least one of the following: performing traffic-level QoS guarantee on a second object, and generating or changing related policy information of traffic-level QoS guarantee;
description information of the second object;
traffic-level QoS information;
first delay information, wherein the first delay information comprises one of the following: delay information within a terminal, and delay information between a terminal-side data end and a terminal;
third delay information; and
fourth delay information, wherein the fourth delay information comprises one of the following: delay information within a server, and delay information within a network-side data end, wherein
the second object comprises at least one of the following: a terminal, a second traffic, second information, second data, a second data channel, and a second computing task; and
the description information of the second object comprises at least one of the following: description information of the terminal, description information of the second traffic, description information of the second information, description information of the second data, description information of the second data channel, and description information of the second computing task, wherein
the second object is the same as or different from the first object.

6. The method according to claim 5, wherein the performing the first operation according to the related information of the first operation comprises:
performing the first operation in a case that a first condition is met, wherein
the first condition comprises at least one of the following that:
the related subscription information of traffic-level QoS guarantee allows traffic-level QoS guarantee to be performed on all or a part of traffics in the first object;
the related subscription information of traffic-level QoS guarantee allows traffic-level QoS guarantee to be performed on a terminal;
the first information is obtained;
a first delay changes;
a second delay changes;
a third delay changes;
a fourth delay changes;
a traffic-level delay changes; and
traffic-level delay guarantee cannot be met.

7. The method according to claim 5, wherein the method further comprises:
obtaining the related policy information of traffic-level QoS guarantee, wherein
the related policy information of traffic-level QoS guarantee comprises at least one of the following:
description information of a target object;
a policy control and charging PCC rule;
a QoS monitoring rule;
second delay information, wherein the second delay information comprises one of the following: a delay between a terminal and a gateway, and a transmission delay within a communications network;
fourth delay information, wherein the fourth delay information comprises one of the following: delay information within a server, and delay information within a network-side data end; and
a traffic-level delay.

8. The method according to claim 7, wherein after the obtaining the related policy information of traffic-level QoS guarantee, the method further comprises:
performing a third operation according to the related policy information of traffic-level QoS guarantee, wherein
the third operation comprises at least one of the following:
determining the second delay information, wherein the second delay information comprises one of the following: a delay between a terminal and a gateway, and a transmission delay within a communications network;
determining the fourth delay information, wherein the fourth delay information comprises one of the following: delay information within a server, and delay information within a network-side data end;
determining QoS guarantee requirement information in a server, wherein the QoS guarantee requirement information in the server comprises the fourth delay information; and
determining related policy information used for traffic-level QoS guarantee of a user plane network element.

9. The method according to claim 7, wherein the method further comprises:
sending a first response and/or traffic-level QoS guarantee start information to a first communications device, wherein
the first response is used to indicate that first request information is successfully responded to; and
the traffic-level QoS guarantee start information comprises at least one of the following: indication information indicating starting of traffic-level QoS guarantee, and description information of the target object for traffic-level QoS guarantee, wherein
the target object comprises at least one of the following: a terminal, a target traffic, target information, target data, a target data channel, and a target computing task; and
the description information of the target object comprises at least one of the following: description information of the target traffic, description information of the target information, description information of the target data, description information of the target data channel, and description information of the target computing task, wherein
the target object is the same as or different from the first object; and
the target object is the same as or different from the second object.

10. The method according to claim 5, wherein the determining or changing second delay information comprises:
requesting to change a second delay in a case that a second condition is met, wherein
the second condition comprises at least one of the following that: a first delay changes, a third delay changes, a fourth delay changes, a traffic-level delay changes, and traffic-level delay guarantee cannot be met.

11. The method according to claim 5, wherein the operation of determining or changing fourth delay information comprises:
requesting to change the fourth delay information in a case that a third condition is met, wherein
the third condition comprises at least one of the following that: a first delay changes, a second delay changes, a third delay changes, a traffic-level delay changes, and traffic-level delay guarantee cannot be met.

12. A quality of service guarantee method, applied to a third communications device and comprising:
obtaining related information of a second operation, wherein the related information of the second operation comprises at least one of the following:
first information, second information, third delay information, and related subscription information of traffic-level QoS guarantee; and
performing the second operation according to the related information of the second operation, wherein
the second operation comprises at least one of the following:
determining to generate or change related policy information of traffic-level QoS guarantee;
determining or changing fourth delay information, wherein the fourth delay information comprises one of the following: delay information within a server, and delay information within a network-side data end;
determining or changing second delay information, wherein the second delay information comprises one of the following: a delay between a terminal and a gateway, and a transmission delay within a communications network;
determining a PCC rule; and
determining QoS guarantee requirement information in a server, wherein the QoS guarantee requirement information in the server comprises the fourth delay information;
the third delay information comprises one of the following: a delay between a gateway and a server, a delay between a communications network and a server, a delay between a gateway and a network-side data end, and a delay between a communications network and a network-side data end;
the first information comprises at least one of the following:
first request information, wherein the first request information is used to request to perform traffic-level QoS guarantee on a first object;
description information of the first object;
traffic-level QoS information;
first delay information, wherein the first delay information comprises one of the following: delay information within a terminal, and delay information between a terminal-side data end and a terminal; and
fourth delay information, wherein the fourth delay information comprises one of the following: delay information within a server, and delay information within a network-side data end, wherein
the first object comprises at least one of the following: a terminal, a first traffic, first information, first data, a first data channel, and a first computing task; and
the description information of the first object comprises at least one of the following: description information of the terminal, description information of the first traffic, description information of the first information, description information of the first data, description information of the first data channel, and description information of the first computing task; and
the second information comprises at least one of the following:
second request information, wherein the second request information is used to request at least one of the following: performing traffic-level QoS guarantee on a second object, and generating or changing related policy information of traffic-level QoS guarantee;
description information of the second object;
traffic-level QoS information;
first delay information, wherein the first delay information comprises one of the following: delay information within a terminal, and delay information between a terminal-side data end and a terminal;
third delay information; and
fourth delay information, wherein the fourth delay information comprises one of the following: delay information within a server, and delay information within a network-side data end, wherein
the second object comprises at least one of the following: a terminal, a second traffic, second information, second data, a second data channel, and a second computing task; and
the description information of the second object comprises at least one of the following: description information of the terminal, description information of the second traffic, description information of the second information, description information of the second data, description information of the second data channel, and description information of the second computing task, wherein
the second object is the same as or different from the first object.

13. The method according to claim 12, wherein the QoS guarantee requirement information in the server comprises a delay within the server.

14. The method according to claim 12, wherein the performing the second operation according to the related information of the second operation comprises:
in a case that a fourth condition is met, determining to generate or change the related policy information of traffic-level QoS guarantee, wherein
the fourth condition comprises at least one of the following that:
the related subscription information of traffic-level QoS guarantee allows traffic-level QoS guarantee to be performed on all or a part of services in the first object, or the related subscription information of traffic-level QoS guarantee allows traffic-level QoS guarantee to be performed on all or a part of services in the second object;
the related subscription information of traffic-level QoS guarantee allows traffic-level QoS guarantee to be performed on a terminal;
the first information is obtained, or the second information is obtained;
a first delay changes;
a second delay changes;
a third delay changes;
a fourth delay changes;
a traffic-level delay changes; and
traffic-level delay guarantee cannot be met.

15. The method according to claim 14, wherein after the determining to generate or change the related policy information of traffic-level QoS guarantee, the method further comprises:
sending the related policy information of traffic-level QoS guarantee, wherein
the related policy information of traffic-level QoS guarantee comprises at least one of the following:
description information of a target object;
a PCC rule;
a QoS monitoring rule;
second delay information, wherein the second delay information comprises one of the following: a delay between a terminal and a gateway, and a transmission delay within a communications network;
fourth delay information, wherein the fourth delay information comprises one of the following: delay information within a server, and delay information within a network-side data end; and
a traffic-level delay.

16. A quality of service guarantee method, applied to a fourth communications device and comprising:
obtaining a third request, wherein the third request is used to request related subscription information of traffic-level QoS guarantee; and
sending the related subscription information of traffic-level QoS guarantee according to the third request.

17. The method according to claim 16, wherein the related subscription information of traffic-level QoS guarantee comprises at least one of the following:
allowing and/or requiring traffic-level QoS guarantee;
not allowing and/or not requiring traffic-level QoS guarantee;
description information of an object allowing and/or requiring traffic-level QoS guarantee; and
description information of an object not allowing and/or not requiring traffic-level QoS guarantee.

18. The method according to claim 16, wherein the related subscription information of traffic-level QoS guarantee comprises description information of an object allowing and/or requiring traffic-level QoS guarantee, wherein
the object comprises at least one of the following: a terminal, a traffic, information, data, and a data channel.

19. A quality of service guarantee apparatus, applied to a first communications device and comprising:
a first sending module, configured to send first information, wherein
the first information comprises at least one of the following:
first request information, wherein the first request information is used to request to perform traffic-level QoS guarantee on a first object;
description information of the first object;
traffic-level QoS information;
first delay information, wherein the first delay information comprises one of the following: delay information within a terminal, and delay information between a terminal-side data end and a terminal; and
fourth delay information, wherein the fourth delay information comprises one of the following: delay information within a server, and delay information within a network-side data end, wherein
the first object comprises at least one of the following: a terminal, a first traffic, first information, first data, a first data channel, and a first computing task; and
the description information of the first object comprises at least one of the following: description information of the terminal, description information of the first traffic, description information of the first information, description information of the first data, description information of the first data channel, and description information of the first computing task.

20. A quality of service guarantee apparatus, applied to a second communications device and comprising:
a first obtaining module, configured to obtain related information of a first operation, wherein the related information of the first operation comprises at least one of the following: first information, third delay information, and related subscription information of traffic-level QoS guarantee; and
a first executing module, configured to perform the first operation according to the related information of the first operation, wherein
the first operation comprises at least one of the following:
determining to send second information or not to send second information;
determining or changing fourth delay information, wherein the fourth delay information comprises one of the following: delay information within a server, and delay information within a network-side data end; and
determining or changing second delay information, wherein the second delay information comprises one of the following: a delay between a terminal and a gateway, and a transmission delay within a communications network;
the first information comprises at least one of the following:
first request information, wherein the first request information is used to request to perform traffic-level QoS guarantee on a first object;
description information of the first object;
traffic-level QoS information;
first delay information, wherein the first delay information comprises one of the following: delay information within a terminal, and delay information between a terminal-side data end and a terminal; and
fourth delay information, wherein the fourth delay information comprises one of the following: delay information within a server, and delay information within a network-side data end, wherein
the first object comprises at least one of the following: a terminal, a first traffic, first information, first data, a first data channel, and a first computing task; and
the description information of the first object comprises at least one of the following: description information of the terminal, description information of the first traffic, description information of the first information, description information of the first data, description information of the first data channel, and description information of the first computing task;
the third delay information comprises one of the following: a delay between a gateway and a server, a delay between a communications network and a server, a delay between a gateway and a network-side data end, and a delay between a communications network and a network-side data end; and
the second information comprises at least one of the following:
second request information, wherein the second request information is used to request at least one of the following: performing traffic-level QoS guarantee on a second object, and generating or changing related policy information of traffic-level QoS guarantee;
description information of the second object;
traffic-level QoS information;
first delay information, wherein the first delay information comprises one of the following: delay information within a terminal, and delay information between a terminal-side data end and a terminal;
third delay information; and
fourth delay information, wherein the fourth delay information comprises one of the following: delay information within a server, and delay information within a network-side data end, wherein
the second object comprises at least one of the following: a terminal, a second traffic, second information, second data, a second data channel, and a second computing task; and
the description information of the second object comprises at least one of the following: description information of the terminal, description information of the second traffic, description information of the second information, description information of the second data, description information of the second data channel, and description information of the second computing task, wherein
the second object is the same as or different from the first object.

21. A quality of service guarantee apparatus, applied to a third communications device and comprising:
a second obtaining module, configured to obtain related information of a second operation, wherein the related information of the second operation comprises at least one of the following: first information, second information, third delay information, and related subscription information of traffic-level QoS guarantee; and
a second executing module, configured to perform the second operation according to the related information of the second operation, wherein
the second operation comprises at least one of the following:
determining to generate or change related policy information of traffic-level QoS guarantee;
determining or changing fourth delay information, wherein the fourth delay information comprises one of the following: delay information within a server, and delay information within a network-side data end; and
determining or changing second delay information, wherein the second delay information comprises one of the following: a delay between a terminal and a gateway, and a transmission delay within a communications network;
determining a PCC rule; and
determining QoS guarantee requirement information in a server, wherein the QoS guarantee requirement information in the server comprises the fourth delay information;
the third delay information comprises one of the following: a delay between a gateway and a server, a delay between a communications network and a server, a delay between a gateway and a network-side data end, and a delay between a communications network and a network-side data end; and
the first information comprises at least one of the following:
first request information, wherein the first request information is used to request to perform traffic-level QoS guarantee on a first object;
description information of the first object;
traffic-level QoS information;
first delay information, wherein the first delay information comprises one of the following: delay information within a terminal, and delay information between a terminal-side data end and a terminal;
fourth delay information, wherein the fourth delay information comprises one of the following: delay information within a server, and delay information within a network-side data end, wherein
the first object comprises at least one of the following: a terminal, a first traffic, first information, first data, a first data channel, and a first computing task; and
the description information of the first object comprises at least one of the following: description information of the terminal, description information of the first traffic, description information of the first information, description information of the first data, description information of the first data channel, and description information of the first computing task; and
the second information comprises at least one of the following:
second request information, wherein the second request information is used to request at least one of the following: performing traffic-level QoS guarantee on a second object, and generating or changing related policy information of traffic-level QoS guarantee;
description information of the second object;
traffic-level QoS information;
first delay information, wherein the first delay information comprises one of the following: delay information within a terminal, and delay information between a terminal-side data end and a terminal;
third delay information; and
fourth delay information, wherein the fourth delay information comprises one of the following: delay information within a server, and delay information within a network-side data end, wherein
the second object comprises at least one of the following: a terminal, a second traffic, second information, second data, a second data channel, and a second computing task; and
the description information of the second object comprises at least one of the following: description information of the terminal, description information of the second traffic, description information of the second information, description information of the second data, description information of the second data channel, and description information of the second computing task, wherein
the second object is the same as or different from the first object.

22. A quality of service guarantee apparatus, applied to a fourth communications device and comprising:
a third obtaining module, configured to obtain a third request, wherein the third request is used to request related subscription information of traffic-level QoS guarantee; and
a fourth sending module, configured to send the related subscription information of traffic-level QoS guarantee according to the third request.

23. A communications device, comprising a processor, a memory, and a computer program that is stored in the memory and executable on the processor, wherein the computer program is executed by the processor to implement steps of the quality of service guarantee method according to any one of claims 1 to 4, or implement steps of the quality of service guarantee method according to any one of claims 5 to 11, or implement steps of the quality of service guarantee method according to any one of claims 12 to 15, or implement the steps of the quality of service guarantee method according to any one of claims 16 to 18.

24. A computer-readable storage medium, wherein the computer-readable storage medium stores a computer program, and the computer program is executed by a processor to implement steps of the quality of service guarantee method according to any one of claims 1 to 4, or implement steps of the quality of service guarantee method according to any one of claims 5 to 11, or implement steps of the quality of service guarantee method according to any one of claims 12 to 15, or implement steps of the quality of service guarantee method according to any one of claims 16 to 18.

25. A chip, wherein the chip comprises a processor and a communications interface, the communications interface is coupled to the processor, and the processor is configured to run a program or an instruction of a network side device to implement steps of the quality of service guarantee method according to any one of claims 1 to 4, or implement steps of the quality of service guarantee method according to any one of claims 5 to 11, or implement steps of the quality of service guarantee method according to any one of claims 12 to 15, or implement steps of the quality of service guarantee method according to any one of claims 16 to 18.

26. A computer program product, wherein the computer program product is stored in a non-transitory storage medium, and the computer program product is executed by at least one processor to implement steps of the quality of service guarantee method according to any one of claims 1 to 4, or implement steps of the quality of service guarantee method according to any one of claims 5 to 11, or implement steps of the quality of service guarantee method according to any one of claims 12 to 15, or implement steps of the quality of service guarantee method according to any one of claims 16 to 18.

27. A communications device, configured to perform steps of the quality of service guarantee method according to any one of claims 1 to 4, or perform steps of the quality of service guarantee method according to any one of claims 5 to 11, or perform steps of the quality of service guarantee method according to any one of claims 12 to 15, or perform steps of the quality of service guarantee method according to any one of claims 16 to 18.
